# EUROPÄISCHE PATENTSCHRIFT

(11) **EP 0 440 972 B1**
(45) Veröffentlichungstag und Bekanntmachung des Hinweises auf die Patenterteilung: **25.01.1995**
(21) Anmeldenummer: 90125251.0
(22) Anmeldetag: 21.12.1990
(51) Int. Cl.: H02G 3/04

(54) **Kabelkanal, wie Brüstungskanal, Leitungsführungskanal, Geräteeinbaukanal od. dgl.**
Cable trunking, such as wall trunking conduit supporting trunking, trunking with built-in apparatus or the like
Caniveau pour câbles,tel qu'un caniveau en parapet, caniveau de cablage caniveau à appareils intégrés ou autres

(30) Priorität: 03.02.1990 DE 4003279
(43) Veröffentlichungstag der Anmeldung: 14.08.1991
(73) Patentinhaber: Hermann Kleinhuis GmbH. & Co. KG, D-58507 Lüdenscheid (DE)
(72) Erfinder: Kleinkorres, Uwe, W-5802 Wetter 1 (DE)
(74) Vertreter: Buse, Karl Georg, Dipl.-Phys.

(56) Entgegenhaltungen:
- EP-A- 0 113 981
- CH-A- 535 882

## Beschreibung

Die Erfindung bezieht sich auf einen Kabelkanal, wie Brüstungskanal, Leitungsführungskanal, Geräteeinbaukanal od.dgl., mit einem Unterteil, dessen Öffnung durch einen Deckel verschließbar ist, wobei der Unterteil einerseits und der Deckel andererseits zusammenwirkende Kupplungen und Gegenkupplungen aufweisen, die sowohl ein Festlegen als auch ein Abnehmen des Deckels am bzw. vom Unterteil ermöglichen, und der Unterteil des Kabelkanals an gegenüberliegenden Begrenzungswandungen seiner Öffnung je einen Eingriffsraum für eines der beiden Enden des Deckels aufweist, wobei diese Eingriffsräume untereinander gleichgestaltet sind, derart, daß wahlweise sowohl das eine als auch das andere Ende des Deckels in einen der beiden Eingriffsräume einführbar ist, und daß das eine Ende des Deckels eine Rast zu seiner Verriegelung am Unterteil aufweist.

Ein solcher Kabelkanal ist bekanntgeworden durch die CH-A 535 882. Bei diesem bekannten Kabelkanal kann der Deckel auf den in der Regel aus Aluminium hergestellten Unterteil aufgebracht werden. Zur Herstellung der Verbindung zwischen dem Deckel und dem Unterteil ist es bei diesem Kabelkanal erforderlich, ein Zwischenelement zu benutzen, das einerseits aus einem elastischen Werkstoff hergestellt ist, und das andererseits wahlweise mit einer von zwei vorhandenen Aufnahmen verbunden werden kann, die im Querschnitt gesehen halbkreisförmig gestaltet sind, und die auf diametral gegenüberliegenden Innenflächen der aufrechten Seitenwandungen des Unterteils angeordnet sind. Dieses Zwischenelement hat seinerseits im Bereich seines rückwärtigen Endes quer zu seiner Längsrichtung angeordnete Vorsprünge, die gemeinsam einen Aufnahmeraum bilden, in die beim Anbringen des Deckels ein Vorsprung desselben rastend eingreift. Nachteilig bei dieser bekannten Ausführungsform des Kabelkanals ist es somit, daß eine direkte Verbindung des Deckels mit dem Unterteil des Kabelkanals nicht möglich ist. Vielmehr ist es zwingend erforderlich, das Zwischenelement in einen der vorhandenen Aufnahmeräume anzubringen. Ein solches Zwischenelement muß darüber hinaus elastisch gestaltet sein. Durch das Vorhandensein eines solchen Zwischenelementes wird sowohl die Herstellung als auch die Montage eines Kabelkanals der hier vorliegenden Art erschwert. Darüber hinaus kann bei der bekannten Ausführungsform nach CH-A 535 882 der Deckel nur auf den Unterteil aufgesetzt oder von diesem abgenommen werden. Eine Zwischenstellung des Deckels ist nicht vorgesehen und auch nicht möglich.

Es gibt Kabelkanäle dieser Art in den unterschiedlichsten Ausführungsformen, dies gilt auch für die Ausbildung der Kupplungen und der Gegenkupplungen zwischen dem Unterteil und Deckel. So ist beispielsweise ein Deckel für Kabelkanäle bekannt, der im Querschnitt gesehen U-förmig gestaltet ist, wobei der Steg dieses U's die Öffnung des Unterteils abdeckt, während die rechtwinklig zum Steg angeordneten Schenkel die oberen Bereiche der Seitenwandungen des Unterteils umgreifen und dort eingeschnappt werden können. Zu diesem Zweck haben der Deckel und die damit zusammenwirkenden Seitenwandungen Rasten und Gegenrasten. Ein Anbringen eines solchen Deckels auf den Unterteil erfolgt von oben her. Bei dieser bekannten Ausführungsform kann der Deckel im Bezug auf den Unterteil nur eine einzige Lage einnehmen.

Desweiteren sind Kabelkanäle in Form von Brüstungskanälen bekannt, bei denen der Unterteil parallel zum Boden zwei den Seitenwandungen des Unterteils zugeordnete Teildecken aufweist, deren Enden in Richtung auf das Innere des Unterteils zurückgebogene Bereiche aufweisen, die mit nach der Vorderseite offenen, U-förmigen Rinnen ausgerüstet sind. Mit diesen zurückgebogenen Bereichen wirken klammerartige, einem flach gehaltenen Deckel angeformte Verbindungselemente zusammen. Auch hier erfolgt das Anbringen des plattenförmigen Deckels von oben her. Der Deckel kann im Bezug auf den Unterteil nur eine einzige Lage einnehmen.

Hier setzt die Erfindung ein. Sie will Kabelkanäle gemäß der CH-A 535 882 weiterverbessern, insbesondere derart, daß bei wirtschaftlich einfacher Herstellung der Deckel im Bezug auf den Unterteil unterschiedliche Lagen einnehmen kann.

Erfindungsgemäß wirkt die Rast des Deckels unmittelbar mit einer Gegenrast des Unterteils des Kabelkanals zusammen. Ferner ist das andere Ende des Deckels derart gestaltet, daß der Deckel nach erfolgter Entriegelung der Rast wahlweise in seine Entnahmestellung oder in seiner Lagegesicherte Offenstellung überführbar ist, wobei das Befestigungsende unterschiedlich gestaltete und bemessene Begrenzungsflächen aufweist, die in Abhängigkeit von den möglichen Stellungen des Deckels mit Abstützflächen und Innenflächen des jeweiligen Eingriffsraumes in Wirkverbindung stehen.

Die erfindungsgemäße Ausbildung eines Kabelkanals mit Deckel hat gegenüber dem Bekannten erhebliche Vorteile. Insbesondere hat es der Benutzer in der Hand, von sich aus festzulegen, wie er den Deckel mit dem Unterteil verbinden will. Dabei kann er zwei Anbringungslagen des Deckels am Unterteil wählen, die sich um 18o° voneinander unterscheiden. Sobald der Deckel in den einen der beiden Eingriffsräume eingebracht ist, kann das im Eingriffsraum befindliche Befestigungsende als Drehachse für ein Verschwenken des Deckels benutzt werden, bis dessen am gegenüberliegenden anderen Ende befindliche Rast mit der Gegenrast am Unterteil zusammenwirkt. In dieser Lage ist der Deckel mit einfachsten Mitteln am Unterteil verrastet. Aus dieser Verriegelungsstellung läßt sich der Deckel in eine Entriegelungsstellung überführen. Dies erfolgt durch Verschwenken des die Rast aufweisenden Endes des Deckels um etwa 2°. Bei dieser geringen Schwenkbewegung kommt die Rast von der Gegenrast frei. Der Deckel ist in dieser Entriegelungslage jedoch noch nicht von dem Unterteil trennbar, weil das Befestigungsende des Deckels so ausgebildet ist, daß es noch mit Bereichen der Innenwandungen des Eingriffsraumes in Wirkverbindung steht. Erst nachdem ein Weiterverschwenken des Deckels um etwa 3o° erfolgt ist, dann kann man den Deckel vom Unterteil trennen. Nur in dieser einen Lage ist eine Entnahme des Deckels vom Unterteil möglich. Wird dagegen der Deckel aus der Entriegelungsstellung um etwa 6o° verschwenkt, dann nimmt er seine maximale Offenstellung ein. Auch in dieser Stellung verhindern Teile des Befestigungsendes des Deckels im Zusammenwirken mit Bereichen der Innenwandung des Eingriffsraumes ein Entfernen des Deckels vom Unterteil. Der Deckel bleibt in dieser maximalen Öffnungsstellung lagegesichert. Dadurch hat der Benutzer die Möglichkeit, den Innenraum des Unterteils zu beschicken, ohne daß ihn dabei der lagegesicherte Deckel stört. Auf der anderen Seite kann durch Kraftaufwendung die lagegesicherte Offenstellung des Deckels aufgehoben werden. Durch Verschwenken des Deckels z.B. entgegen dem Uhrzeigersinn kann dann der Deckel in eine seiner anderen Lagen, beispielsweise in die Verriegelungslage zurückgeschwenkt werden.

Bei der bevorzugten Ausführungsform der Erfindung ist jeder Eingriffsraum des Kabelkanals nach außen hin durch eine Teildecke des Unterteils begrenzt, deren Innenwand eine Ausnehmung aufweist, an die sich eine senkrechte Begrenzungswand anschließt, die in eine waagerechte, parallel zur Teildecke verlaufende weitere Begrenzungswand übergeht, die ihrerseits in einen gabelförmigen Endbereich ausläuft. Dabei weist der Eingriffsraum der senkrechten Begrenzungswand gegenüberliegend eine Eingriffsöffnung auf. Diese Eingriffsöffnung dient zum Einführen des Befestigungsendes des Deckels und ist dementsprechend dimensioniert.

Es empfiehlt sich, den gabelförmigen Endbereich der waagerechten Begrenzungswand aus zwei unterschiedlich gestalteten und bemessenen Schenkeln bestehen zu lassen, die durch einen Zwischenraum voneinander getrennt sind. Dabei weist der eine, nämlich der kürzere Schenkel des gabelförmigen Endbereiches die Gegenrast auf, welche mit der Rast des Deckels zusammenwirkt. In vorteilhafter Weise ist dabei das vordere Ende des kürzeren Schenkels des gabelförmigen Endbereiches die Gegenrast.

Nach einem weiteren Vorschlag der Erfindung trägt der Deckel in Nähe seines einen Endes einen quer zu ihm angeordneten, fingerartigen Vorsprung, der an seiner Vorderseite eine vorzugsweise angeformte Rast hat. Der fingerartige Vorsprung ist dabei leicht elastisch gehalten, so daß er innerhalb gewisser Grenzen bewegt werden kann, was für das Zusammenwirken mit der Gegenrast von Vorteil ist.

Der Mittelteil des Deckels ist zweckmäßig eben gehalten und liegt in seiner Verriegelungslage bündig mit den beiden Teildecken des Unterteiles des Kabelkanals. An seinem anderen Ende geht der ebene Mittelteil des Deckels in einen in Richtung auf den Unterteil gekrümmten Bereich über, der seinerseits in den verbreiterten End- bzw. Befestigungsbereich übergeht. Dieser Befestigungsbereich hat unterschiedlich gestaltete und und unterschiedlich bemessene Begrenzungsflächen, die in Abhängigkeit von den möglichen Stellungen des Deckels in bezug auf den Unterteil mit Abstützflächen und Innenflächen des Eingriffsraumes in Wirkverbindung stehen.

In der Verriegelungsstellung des Deckels, in der dieser mit den beiden Teildecken des Unterteils bündig liegt, hintergreift die Rast seines einen Endes die eine Gegenrast des Unterteils. Demgegenüber greift eine Spitze des Befestigungsbereiches des Deckels in die eine Ausnehmung der Teildecke. Darüber hinaus stützt sich die Außenseite des gekrümmten Bereiches des Deckels an einer Abstützfläche des einen Schenkels des gabelförmigen Endbereiches der waagerechten Begrenzungswand des Eingriffsraumes ab. In diese Verriegelungsstellung gelangt der Deckel dadurch, daß man ihn in einer ganz bestimmten Lage durch die Eingriffsöffnung in den Eingriffsraum im Bereich der einen Teildecke des Unterteiles hineinbringt und danach ihn so weit verschwenkt, bis die Rast an seinem vorderen freien Ende die Gegenrast überläuft, die im Bereich der gegenüberliegenden anderen Teildecke vorhanden ist und zwar an der Vorderseite des einen Schenkels des gabelförmigen Endbereiches.

In der Verriegelungsstellung des Deckels ist sein eines Ende unter Bildung eines Spaltes entfernt von dem freien Ende der einen Teildecke des Unterteils angeordnet. Dieser Spalt dient zum Einführen der Spitze eines Werkzeuges, beispielsweise eines Schraubendrehers, nämlich dann, wenn der Deckel bei Bedarf aus seiner Verriegelungsstellung in eine Entriegelungsstellung überführt werden soll. Dazu ist es lediglich erforderlich, mittels des Schraubendrehers ein Drehmoment auf das vordere freie Ende des Deckels auszuüben und diesen um etwa 2° zu drehen. Bei einer solchen kurzen Drehung überläuft die Rast bereits die Gegenrast im Bereich der einen Teildecke. In dieser Entriegelungsstellung ist jedoch eine Entnahme des Deckels von dem Unterteil des Kabelkanals nicht möglich.

Um dieses zu erreichen, muß der Deckel um einen größeren Winkel verschwenkt werden, beispielsweise um 3o°. Dies ist die Entnahmestellung des Deckels. In dieser Entnahmestellung liegt das Befestigungsende des Deckels frei im Eingriffsraum des Unterteils und vor dessen Eingriffsöffnung. Nur in dieser Lage ist das Abnehmen des Deckels vom Unterteil möglich.

Der Deckel kann bei Bedarf vom Benutzer auch in seine maximale Offenstellung überführt werden. Diese ist dann erreicht, wenn aus der Verriegelungsstellung heraus der Deckel um etwa 6o° geschwenkt wird. In dieser maximalen Offenstellung liegt das Befestigungsende des Deckels mit seiner Gegenfläche an einer Abstützfläche des oberen Schenkels des gabelförmigen Endes der waagerechten Befestigungswand des Eingriffsraumes an. Ferner stützt sich die Innenseite des gekrümmten Bereiches des Deckels am abgerundeten Ende der einen Teildecke des Unterteils ab. In dieser maximalen Offenstellung ist der Deckel lagegesichert. dies hat den Vorteil, daß er in seiner Lage verharrt, so daß der Benutzer den Innenraum des Unterteiles beschicken kann, beispielsweise mit Kabeln, Leitungen oder auch mit Installationsgeräten. Erst durch Aufwenden einer gewissen Kraft kann der Deckel aus dieser maximalen Offenstellung zurückverschwenkt werden, beispielsweise bis er seine Verriegelungsstellung wieder einnimmt.

Die erfindungsgemäße Ausbildung des Deckels und der mit ihm zusammenhwirkenden Elemente des Unterteils können nicht nur bei einzelnen Kabelkanälen angewendet werden sondern auch dann, wenn es sich um einen grundsätzlich bekannten Doppelkanal handelt.

Ein solcher Doppelkanal hat zwei Unterbringungsräume, die durch einen Trennwand voneinander getrennt sind. Bei einem solchen Doppelkanal empfiehlt es sich, den Boden des gemeinsamen Unterteils eine senkrecht zu ihm angeordnete Trennwand aufweisen zu lassen, die an ihrem freien Ende diametral gegenüberliegend jeweils einen Eingriffsraum aufweist.

Es empfiehlt sich, die beiden Teildecken und die waagerechten Begrenzungswandungen der Eingriffsräume der Trennwand unmittelbar anzuformen.

Nach einem weiteren Vorschlag der Erfindung bildet das obere Ende der Trennwand zugleich die gemeinsame senkrechte Begrenzungswand für beide Eingriffsräume.

Unabhängig davon, ob es sich um einen Einfach- oder um einen Doppelkanal handelt, ist es zweckmäßig, die Eingriffsöffnungen der auf gegenüberliegenden Seiten der Öffnung des Unterteils liegenden Eingriffsräume aufeinander zuzurichten.

Auf den Zeichnungen ist die Erfindung in mehreren Ausführungsbeispielen dargestellt und zwar zeigen:
- Fig. 1: einen Schnitt durch einen erfindungsgemäß ausgebildeten Kabelkanal, bei dem sich der Deckel, welcher die Öffnung des Unterteiles verschließt, in seiner Verriegelungsstellung befindet,
- Fig. 2: einen erfindungsgemäß ausgebildeten Kabelkanal, der als Sockelkanal ausgebildet ist, im Schnitt, weobei der Deckel der linken Kammer der Fig. 2 sich in seiner Entnahmelage befindet, während der Deckel gemäß der rechten Hälfte dieser Fig. 2 seine maximale Offenstellung einnimmt,
- Fig. 3: im Schnitt und im vergrößerten Maßstab, teilweise weggebrochen, den oberen Bereich des Kabelkanals nach der Fig. 1, bei der sich der Deckel in seiner Verriegelungsstellung befindet,
- Fig. 4: im Schnitt, teilweise weggebrochen, das Befestigungsende des Deckels in dem einen Eingriffsraum, wobei sich der Deckel in seiner Entriegelungsstellung befindet,
- Fig. 5: einen der Fig. 4 entsprechenden Teilschnitt durch den Kabelkanal gemäß der Fig. 1 der Zeichnung, jedoch diesmal in der Entnahmestellung des Deckels,
- Fig. 6: ebenfalls im Teilschnitt, teilwese weggebrochen, die Lage des Befestigungsendes des Deckels in dem Eingriffsraum des Unterteils in der max. möglichen Öffnungsstellung des Deckels und
- Fig. 7: in nochmals vergrößerter Darstellung und im Schnitt die Lage des Befestigungsendes des Deckels in seiner Entnahmelage.

Es sei zunächst erwähnt, daß in den Figuren der Zeichnungen nur diejenigen Teile eines Kabelkanals wiedergegeben sind, welche für das Verständnis der Erfindung Bedeutung haben. Insbesondere sind in das Innere des Kabelkanals weder Leitungen noch Installationsgeräte oder deren Teile eingeführt. Dies kann in grundsätzlich bekannter Weise erfolgen. Es sei ferner darauf hingewiesen, daß es sich bei dem Kabelkanal um einen Brüstungskanal, einen Leitungsführungskanal oder einen Geräteeinbaukanal handeln kann. Wesentlich ist bei der Erfindung die Ausbildung des Deckels und die Art seiner Anbringungsmöglichkeiten an dem Unterteil.

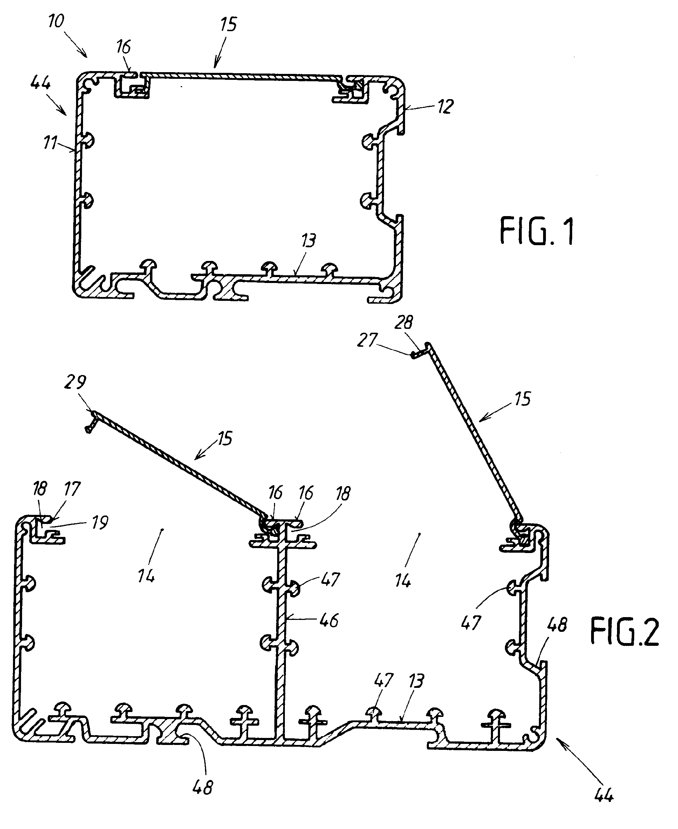

Der dem Ausführungsbeispiel gemäß der Fig. 1 der Zeichnung zugrundegelegte Kabelkanal ist generell mit 10 bezeichnet. Er besteht aus einem etwa U-förmigen Querschnitt aufweisenden Unterteil 44 und einem Deckel 15, der die obere Öffnung 14 des Unterteils 44 verschließen kann, wie dies in der Fig. 1 der Zeichnung dargestellt ist. Beide Elemente des Kabelkanals 1o, nämlich der Unterteil 44 und der Deckel 15, sind einstückig aus einem metallischen Werkstoff, z.B. aus Aluminium gefertigt. Im gewählten Ausführungsbeispiel nach der Fig. 1 der Zeichnung hat der Unterteil 44 eine Seitenwand 11, die an ihrer Außenfläche eben gehalten ist. Ihr gegenüber liegt eine weitere Seitenwand 12, die in ihrer Mitte einen nicht näher bezeichneten, vertieften Bereich aufweist, dem in bekannter Weise Kupplungen 48 zugeordnet sind. Die beiden Seitenwände 11 und 12 des Unterteiles 44 sind durch einen Boden 13 miteinander verbunden. Im gewählten Ausführungsbeispiel läuft dieser Boden 13 nicht durch sondern hat sowohl innen als auch außen nicht näher bezeichnete vertiefte Bereiche. Darüber hinaus sind an der Innenseite Halteleisten 47 angeformt, die im Ausführungsbeispiel im Querschnitt pilzförmig gestaltet sind.

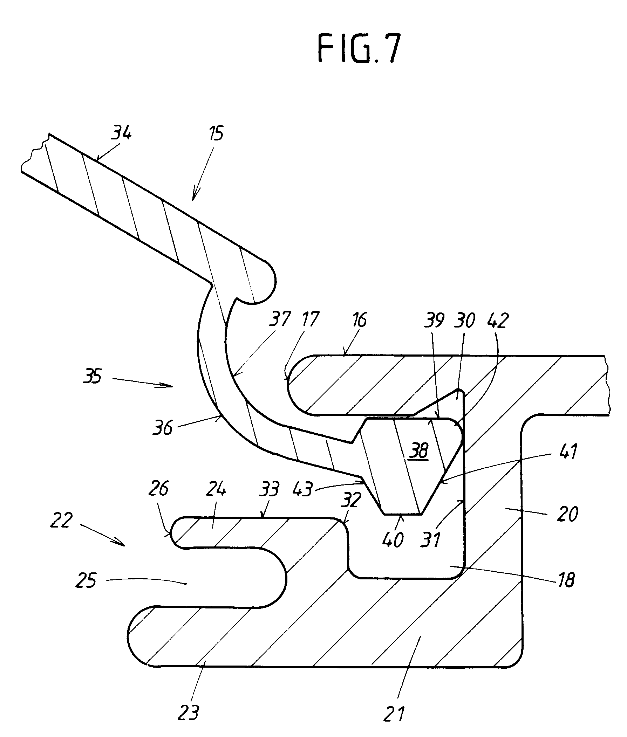

Dem Boden 13 gegenüber liegt die Öffnung 14 des Unterteils 44, die jedoch nicht die gesamte Oberseite des Unterteils einnimmt. Vielmehr bleiben Teildecken 16 stehen, die einmal der einen Seitenwand 11 und zum anderen der anderen Seitenwand 12 angeformt sind. Die Teildecken 16 stehen dabei rechtwinklig auf den beiden Seitenwänden 11 und 12. Im Bereich der Teildecken 16 des unterteiles 44 ist jeweils ein generell mit 18 bezeichneter Eingriffsraum für die Enden des Deckels 15 untergebracht. Die Ausbildung dieses Eingriffsraumes 18 ist am besten aus der stark vergrößerten Fig. 7 der Zeichnungen ersichtlich. Daraus folgt, daß jeder Eingriffsraum 18 nach außen hin durch eine Teildecke 16 des Unterteiles 44 begrenzt ist. Die Innenwand der Teildecke hat dabei eine in Draufsicht gesehen etwa dreieckige Ausnehmung 3o. An die Teildecke 16 schließt sich eine senkrechte Begrenzungswand 2o an, die in eine waagerecht und parallel zur Teildecke verlaufende weitere Begrenzungswand 21 übergeht. Diese untere Begrenzungswand 21 läuft in einen gabelförmigen Endbereich 22 aus. Der gabelförmige Endbereich 22 der waagerechten Begrenzungswand 21 besteht aus zwei unterschiedlich gestalteten und bemessenen Schenkeln 23 und 24, von denen der der Öffnung 14 zugekehrte Schenkel 24 der kleinere und kürzere ist. Die beiden Schenkel 23 und 24 sind durch einen Zwischenraum 25 voneinander getrennt.

Aus der Fig. 7 der Zeichnung ist auch ersichtlich, daß der kürzere Schenkel 24 die Gegenrast 26 aufweist, die mit einer Rast 27 des Deckels 15 in der Verriegelungsstellung des Deckels zusammenwirkt. Im gewählten Ausführungsbeispiel ist die Gegenrast 26 das vordere freie Ende des Schenkels 24. Zwischen der Oberseite des Schenkels 24 und der parallel dazu liegenden Teildecke 16 ist eine Eingriffsöffnung 19 freigelassen. Durch diese kann das Befestigungsende 38 des Deckels 15 in den Eingriffsraum 18 eingeführt werden, so wie dies in der Fig. 7 wiedergegeben ist. In dieser Lage des Befestigungsendes 38 ist eine Entnahme des Deckels vom Unterteil 44 möglich.

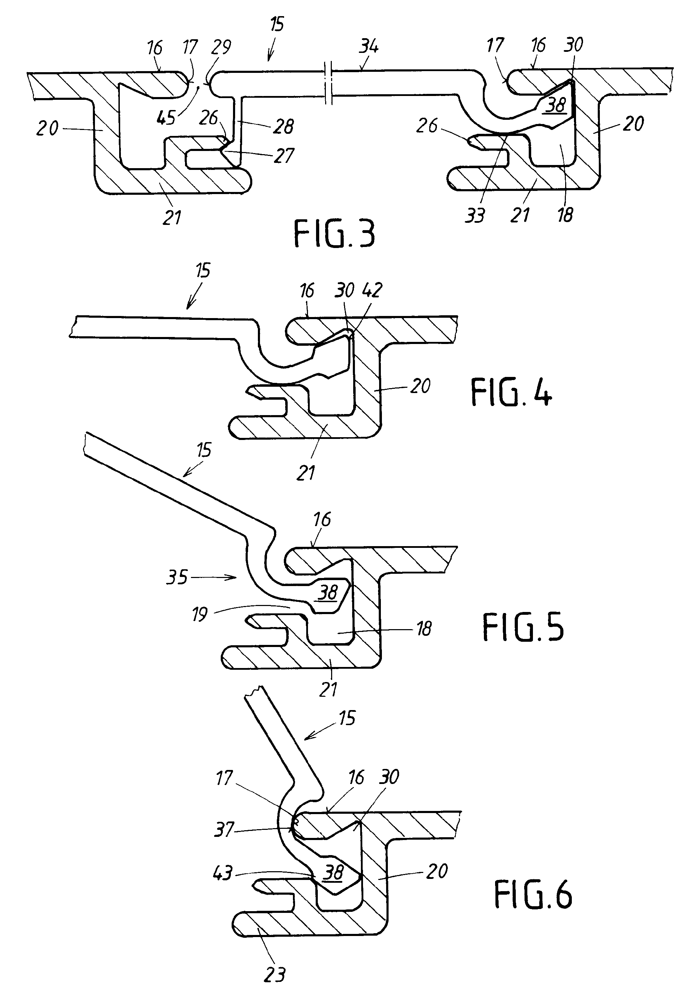

Das Befestigungsende 38 des Deckels 15 kann innerhalb des Eingriffsraumes 18 mehrere Stellungen einnehmen. Diese unterschiedlichen Stellungen sind in den Fig. 3 bis 6 der Zeichnungen wiedergegeben.

Die Fig. 3 der Zeichnung gibt die Verriegelungsstellung des Deckels 15 am Unterteil 44 des Kabelkanals 1o wieder. Daraus folgt, daß der Deckel 15 mit der Rast 27 mit der Gegenrast 26 des gabelförmigen Endbereiches 22 in Wirkverbindung steht. Die Rast 27 ist dabei an einem fingerartigen Vorsprung 28 an der Innenseite des Deckels vorgesehen, wobei dieser fingerartige Vorsprung 28 etwas entfernt von dem vorderen freien Ende 29 des Deckels liegt. In dieser Verriegelungsstellung stützt sich auch das nicht näher bezeichnete vordere Ende des fingerartigen Vorsprunges 28 auf dem Schenkel 23 des gabelförmigen Endbereiches 22 ab.

Die Fig. 3 läßt auch erkennen, daß in der Verriegelungsstellung des Deckels 15 sein vorderes Ende 29 entfernt von dem abgerundeten freien Ende der einen Teildecke 16 angeordnet ist. Auf diese Weise ist ein Spalt 45 gebildet, der zum Einführen eines Werkzeuges, wie eines Schraubendrehers, dient. Ein solcher kann eingesetzt werden, um den Deckel 15 aus seiner Verriegelungs- in eine Entriegelungsstellung zu überführen.

Die Ausbildung des gegenüberliegenden anderen Endes des Deckels 15, nämlich des Befestigungsendes 38 und des damit zusammenwirkenden Teilbereiches ist am besten aus der Fig. 7 der Zeichnungen zu entnehmen. Daraus folgt, daß der eben gehaltene Mittelteil 34 des Deckels 15 in einen gekrümmten, schmaler gehaltenen Bereich 35 übergeht. Die Krümmung des gekrümmten Bereiches 35 ist dabei in Richtung auf den Boden 13 des Unterteiles 44 gerichtet. Die Außenseite des gekrümmten Bereiches 35 ist mit 36 und die Innenseite mit 37 bezeichnet. Beide wirken in noch zu schildernder Weise mit benachbarten Wandungen des Eingriffsraumes 18 zusammen. Der gekrümmte Bereich 35 geht dann in den Endbereich 38 über. Das Befestigungsende 38 hat unterschiedlich gestaltete und bemessene Begrenzungsflächen, die in Abhängigkeit von den möglichen Stellungen des Deckels 15 mit Abstützflächen und Innenflächen des Eingriffsraumes 18 in Wirkverbindung stehen. Im einzelnen gilt dazu folgendes:

Das Befestigungsende 38 hat eine I. Begrenzungsfläche 39 sowie eine im Abstand und parallel dazu angeordnete II. Begrenzungsfläche 4o, die jedoch kürzer als die mit 39 bezeichnete gehalten ist, wie die Fig. 7 erkennen läßt. Die beiden Begrenzungsflächen 39 und 4o sind durch eine schrägverlaufende Verbindungsfläche 41 miteinander verbunden. Dabei ist der Verbindungsbereich zwischen den Flächen 39 und 41 als Spitze 42 ausgebildet. Diese Spitze 42 liegt in der Verriegelungslage des Deckels gemäß der Fig. 3 der Zeichnung formschlüssig in der Ausnehmung 3o der einen Teildecke 16. In dieser Verriegelungsstellung stützt sich ferner die Außenseite 36 an der Abstützfläche 33 des Schenkels 24 des gabelförmigen Endbereiches 22 der waagerechten Begrenzungswand 21 des Eingriffsraumes 18 ab. Soll nun der Deckel 15 aus seiner in der Fig. 3 dargestellten Verriegelungslage in die Entriegelungslage gemäß der Fig. 4 überführt werden, so führt man mit seiner Spitze voran einen Schraubendreher durch den Spalt 45 hindurch in den Eingriffsraum 18 ein. Durch Verschwenken des Schraubendrehers kann man dann eine solche Kraft auf die Innenseite des Deckels 15 ausüben, daß die Rast 27 von der Gegenrast 26 freikommt. Um dieses zu erreichen, ist es lediglich erforderlich, den Deckel 15 um etwa 2° aus seiner Verriegelungsstellung nach der Fig. 3 herauszuverschwenken. In dieser Entriegelungsstellung tritt die Spitze 42 des Befestigungsendes 38 etwas aus der Ausnehmung 3o der Teildecke 16 heraus. Dagegen bleibt die Außenseite 36 des gekrümmten Bereiches 35 des Deckels 15 noch in Anlage an der Abstützfläche 33. Dies bedeutet, daß auch in der Entriegelungsstellung des Deckels 15 keine Entnahme des Deckels 15 möglich ist. Dies wird erst dann der Fall sein, wenn der Deckel 15 um etwa 3o° nach außen verschwenkt wird, wobei die Verriegelungsstellung als Ausgangsbasis angesehen wird. Der Deckel 15 hat dann die in der Fig. 5 wiedergegebene Lage. In dieser liegt sein Befestigungsende 38 frei in dem Eingriffsraum 18 und zwar vor der Eingriffsöffnung 19. In dieser Lage besteht daher die Möglichkeit, das Befestigungsende 38 durch die Eingriffsöffnung 19 herauszubewegen mit dem Erfolg, daß der Deckel 15 vom Unterteil 44 freikommt.

Der Deckel 15 kann aber auch noch in eine weitere Stellung überführt werden, nämlich in die maximale Offenstellung gemäß der Fig. 6 der Zeichnung. Diese Stellung wird dann erreicht, wenn man von der Verriegelungsstellung aus den Deckel 15 um etwa 6o° verschwenkt. In dieser Lage liegt die Spitze 42 des Befestigungsendes 38 an der Innenseite der senkrechten Begrenzungswand 2o des Eingriffsraumes 18 an. Ferner liegt die Gegenfläche 43 des Befestigungsendes 38 an der Abstützfläche 32. Letztere ist der Endbereich der Außenseite von dem Schenkel 24 des gabelförmigen Endbereiches der waagerechten Begrenzungswand 21. Zugleich stützt sich die Innenseite 37 des gekrümmten Bereiches 35 des Deckels 15 an dem benachbarten abgerundeten freien Ende 17 der einen Teildecke 16 ab. Durch diese mehrfache Abstützung des einen Endbereiches des Deckels 15 ist dieser in der maximalen Offenstellung gesichert. Der Benutzer des Kabelkanales hat daher die Möglichkeit, durch die Öffnung 14 des Kabelkanals 1o hindurch die gewünschten Kabel, Leitungen, Installationsgeräte od.dgl. einzubringen und festzulegen. Durch Anwendung einer äußeren Kraft auf die Außenseite des Mittelteils 34 des Deckels 15 kann dieser aus der maximalen Öffnungslage gemäß der Fig. 6 der Zeichnung wieder zurückgeschwenkt werden, beispielsweise bis zur Verriegelungsstellung gemäß der Fig. 3. Dies geschieht z.B. dann, wenn die Arbeiten im Bereich des Innenraumes des Unterteiles 44 des Kabelkanals 1o abgeschlossen sind.

In der Fig. 1 der Zeichnungen ist lediglich ein Einzelkabelkanal 1o wiedergegeben.- Demgegenüber handelt es sich bei der Ausführungsform des Kabelkanales 1o nach der Fig. 2 um einen sogenannten Doppelkanal. Bei einem solchen sind in an sich bekannter Weise in einem gemeinsamen Unterteil durch eine Trennwand mehrere, im vorliegenden Fall zwei Unterbringungsräume oder Kammern geschaffen. Dabei ist jeder Aufnahmeraum nach oben hin offen. Dort befindet sich die Öffnung 14. Diese wird aber durch einen Deckel 15 verschlossen. Dabei werden für den Doppelkanal nach der Fig. 2 der Zeichnungen insgesamt zwei Deckel 15 benutzt, die unabhängig voneinander betätigt werden können und die jeweils die erfindungsgemäße Ausbildung aufweisen. Im gewählten Ausführungsbeispiel ist der in der Fig. 2 linke Deckel 15 in seiner Entnahmestellung. Dagegen befindet sich der in der rechten Hälfte der Fig. 2 wiedergegebene Deckel 15 in seiner maximalen Öffnungslage. In dem einen Fall hat daher das Befestigungsende 38 des Deckels 15 eine Lage, wie sie in der Fig. 5 der Zeichnung wiedergegeben ist. Die Lage des rechten Deckels 15 der Fig. 2 der Zeichnung entspricht dagegen derjenigen gemäß der Fig. 6 der Zeichnung.

Im übrigen ist in an sich bekannter Weise der gemeinsame Unterteil 44 durch eine Trennwand 46 in zwei Kammern unterteilt. Dabei ist die Trennwand 46 dem Boden 13 unmittelbar angeformt und steht senkrecht zu ihm. Die Trennwand 46 hat an ihrem freien Ende diametral gegenüberliegend jeweils einen Eingriffsraum 18. Auch diese beiden Eingriffsräume sind untereinander gleichgestaltet, wenn auch spiegelbildlich angeordnet. Die beiden Teildecken 16 und die waagerechten Begrenzungswandungen der Eingriffsräume 18 sind dabei der Trennwand 46 unmittelbar angeformt.

Das obere Ende der Trennwand 46 bildet bei der Ausführungsform der Erfindung nach der Fig. 2 der Zeichnung zugleich die gemeinsame senkrechte Begrenzungswand 2o für beide nebeneinanderliegenden Eingriffsräume 18.

Im gewählten Ausführungsbeispiel nach der Fig. 2 der Zeichnung ist auch wiederum im Bereich der Seitenwand 12 und im Bereich des Bodens die Anordnung von Kupplungen 48 vorgesehen. Diese können in bekannter Weise mit Gegenkupplungen zusammenwirken, beispielsweise um Verbinder aufzunehmen, durch die mehrere Kabelkanäle zu einer Baueinheit zusammengefügt werden.

Wie bereits erwähnt, sind die dargestellten Ausführungen nur beispielsweise Verwirklichungen der Erfindung und diese nicht darauf beschränkt. Vielmehr sind noch mancherlei andere Ausführungen und Anwendungen möglich. Insbesondere beschränkt sich die erfindungsgemäße Ausbildung eines Deckels 15 und die Möglichkeit, diesen Deckel in unterschiedlichen Richtungen in bezug auf den Unterteil eines Kabelkanals anzuordnen, nicht auf den dargestellten Kabelkanal 1o sondern die Erfindung kann auch bei anderen, an sich bekannten Kabelkanälen eingesetzt werden, seien es nun Brüstungskanäle, Leitungsführungskanäle, Geräteeinbaukanäle od.dgl. Ferner besteht die Möglichkeit, das Befestigungsende 38 des Deckels 15 und die mit diesem zusammenwirkenden Teile des Eingriffsraumes so zu gestalten, daß die Entnahmestellung oder die maximale Offenstellung eine andere Winkellage in bezug auf die Teildecke 16 hat. Dabei können auch andere Winkel als 3o° oder 6o° eingenommen werden. Es ist auch möglich, anstelle des gabelförmigen Endbereiches der einen Begrenzungswand des Eingriffsraumes einen einwandigen zu benutzen. Zur Erzielung einer besseren Federung kann der fingerartige Vorsprung des Deckels auch länger als in den Zeichnungsfiguren dargestellt ausgebildet werden. In diesem Fall kann die Rast an seiner Vorderseite auch mit einer Gegenrast zusammenwirken, die abweichend vom Ausführungsbeispiel ausgebildet ist und die auch an einer anderen Stelle als zeichnerisch festgehalten vorgesehen werden kann.

## Patentansprüche

1. Kabelkanal, wie Brüstungskanal, Leitungsführungskanal, Geräteeinbaukanal od.dgl., mit einem Unterteil (44), dessen Öffnung (14) durch einen Deckel (15) verschließbar ist, wobei der Unterteil (44) einerseits und der Deckel (15) andererseits zusammenwirkende Kupplungen und Gegenkupplungen aufweisen, die sowohl ein Festlegen als auch ein Abnehmen des Deckels (15) am bzw. vom Unterteil (44) ermöglichen, und der Unterteil (44) des Kabelkanals (10) an gegenüberliegenden Begrenzungswandungen seiner Öffnung (14) je einen Eingriffsraum (18) für eines der beiden Enden (27, 28, 29 bzw. 38) des Deckels (15) aufweist, wobei diese Eingriffsräume (18) untereinander gleichgestaltet sind, derart, daß wahlweise sowohl das eine als auch das andere Ende des Deckels (15) in einen der beiden Eingriffsräume (18) einführbar ist, und daß das eine Ende des Deckels (15) eine Rast (27) zu seiner lösbaren Verriegelung am Unterteil (44) aufweist,
**dadurch gekennzeichnet**,
daß die Rast (27) unmittelbar mit einer Gegenrast (26) des Unterteils (44) des Kabelkanals (10) zusammenwirkt, und daß das andere Ende des Deckels (15) derart gestaltet ist, daß der Deckel nach erfolgter Entriegelung der Rast (27) wahlweise in seine Entnahmestellung oder in seine lagegesicherte Offenstellung überführbar ist, wobei das Befestigungsende (38) unterschiedlich gestaltete und bemessene Begrenzungsflächen (39, 40, 41, 43) aufweist, die in Abhängigkeit von den möglichen Stellungen des Deckels (15) mit Abstützflächen und Innenflächen des Eingriffsraumes (18) in Wirkverbindung stehen.

2. Kabelkanal nach Anspruch 1, dadurch gekennzeichnet, daß jeder Eingriffsraum (18) nach außen hin durch eine Teildecke (16) des Unterteils (44) begrenzt ist, deren Innenwand eine Ausnehmung (30) aufweist, und an die sich eine senkrechte Begrenzungswand (20) anschließt, die in eine waagerechte, parallel zur Teildecke (16) verlaufende weitere Begrenzungswand (21) übergeht, die ihrerseits in einen gabelförmigen Endbereich (22) ausläuft, und daß der Eingriffsraum (18) der senkrechten Begrenzungswand (20) gegenüberliegend eine Eingriffsöffnung (19) für das eine Ende des Deckels (15) aufweist.

3. Kabelkanal nach Anspruch 1 und 2, dadurch gekennzeichnet, daß der gabelförmige Endbereich (22) der waagerechten Begrenzungswand (21) aus zwei unterschiedlich gestalteten und bemessenen Schenkeln (23 bzw. 24) besteht, die durch einen Zwischenraum (25) voneinander getrennt sind, und von denen der kürzere Schenkel (24) die mit der Rast (27) des Deckels (15) zusammenwirkende Gegenrast (26) aufweist.

4. Kabelkanal nach Anspruch 1 bis 3, dadurch gekennzeichnet, daß der Deckel (15) in Nähe seines einen Endes (29) einen quer zu ihm angeordneten fingerartigen Vorsprung (28) aufweist, der an seiner Vorderseite die Rast (27) trägt (Fig. 1 - 3).

5. Kabelkanal nach Anspruch 4, dadurch gekennzeichnet, daß der Mittelteil (34) des Deckels (15) eben gehalten ist, in seiner Verriegelungslage bündig mit den Teildeckeln (16) liegt und an seinem anderen Ende über einen in Richtung auf den Unterteil (44) gekrümmten Bereich (35) in ein verbreitertes Befestigungsende (38) übergeht, an dem die unterschiedlich gestalteten und bemessenen Begrenzungsflächen (39, 40, 41, 43) liegen (Fig. 3 - 7).

6. Kabelkanal nach Anspruch 2 und 5, dadurch gekennzeichnet, daß in der Verriegelungsstellung des Deckels (15) die Rast (27) seines einen Endes die eine Gegenrast (26) des Unterteils (44) hintergreift, während eine Spitze (42) des Befestigungsbereiches (38) des Deckels (15) in die Ausnehmung (30) der Teildecke (16) eingreift, und sich die Außenseite (36) des gekrümmten Bereiches (35) des Deckels (15) an die Abstützfläche (33) des einen Schenkels (24) des gabelförmigen Endbereiches (22) der waagerechten Begrenzungswand (21) des Eingriffraumes (18) anlegt (Fig. 3).

7. Kabelkanal nach Anspruch 6, dadurch gekennzeichnet, daß in der Verriegelungsstellung des Deckels (15) sein eines Ende (29) unter Bildung eines Spaltes (45) entfernt von dem freien Ende (17) der einen Teildecke (16) des Unterteils (44) angeordnet ist (Fig. 3).

8. Kabelkanal nach Anspruch 1 und 7, dadurch gekennzeichnet, daß der Deckel (15) durch Einführen und Verschwenken eines Werkzeuges, wie eines Schraubendrehers in den Spalt (45) aus einer Verriegelungsstellung in seine Entriegelungsstellung überführbar ist, in welcher die Rast (27) die Gegenrast (26) überlaufen hat, und die Spitze (42) des Befestigungsendes (38) aus der Ausnehmung (30) herausgetreten ist (Fig. 4).

9. Kabelkanal nach einem oder mehreren der vorangehenden Ansprüche, dadurch gekennzeichnet, daß in der Entnahmestellung des Deckels (15) sein Befestigungsende (38) frei im Eingriffsraum (18) des Unterteils und vor dessen Eingriffsöffnung (19) liegt (Fig. 5).

10. Kabelkanal nach Anspruch 9, dadurch gekennzeichnet, daß der Deckel (15) in seiner Entnahmelage mit den Teildecken (16) des Unterteils (44) etwa einen Winkel von 30° einschließt (Fig. 2, linke Hälfte und Fig. 5).

11. Kabelkanal nach Anspruch 1, dadurch gekennzeichnet, daß das Befestigungsende (38) des Deckels (15) in seiner maximalen Offenstellung mit seiner Gegenfläche (43) an einer Abstützfläche (32) des Schenkels (24) des gabelförmigen Endes (22) der waagerechten Befestigungswand (21) des Eingriffraumes (18) anliegt, und daß sich die Innenseite (37) des gekrümmten Bereiches (35) des Deckels (15) an dem einen abgerundeten Ende (17) der einen Teildecke (16) des Unterteils (44) abstützt (Fig. 6).

12. Kabelkanal nach Anspruch 11, dadurch gekennzeichnet, daß der Deckel (15) in seiner maximalen Offenstellung mit den beiden Teildecken (16) des Unterteils (44) etwa einen Winkel von 60° einschließt (Fig. 2, rechte Hälfte und Fig. 6).

13. Kabelkanal nach Anspruch 1, der als Doppelkanal ausgebildet ist, der zwei Unterbringungsräume aufweist, deren obere Öffnung jeweils durch einen Deckel verschließbar ist, dadurch gekennzeichnet, daß der Boden (13) des gemeinsamen Unterteils (44) eine senkrecht zu ihm angeordnete Trennwand (46) aufweist, die an ihrem freien Ende diametral gegenüberliegend jeweils einen Eingriffsraum (18) aufweist (Fig. 2).

14. Kabelkanal nach Anspruch 13 dadurch gekennzeichnet, daß die beiden Teildecken (16) und die waagerechten Begrenzungswandungen (21) der Eingriffsräume (18) der Trennwand (46) unmittelbar angeformt sind.

15. Kabelkanal nach Anspruch 13 und 14, dadurch gekennzeichnet, daß das obere Ende der Trennwand (46) zugleich die gemeinsame senkrechte Begrenzungswand (20) für beide Eingriffsräume (18) bildet.

16. Kabelkanal nach einem der vorangehenden Ansprüche, dadurch gekennzeichnet, daß die Eingriffsöffnungen (19) der auf gegenüberliegenden Seiten der Öffnung (14) des Unterteils (44) liegenden Eingriffsräume (18) aufeinander zu gerichtet sind.

## Claims

1. Cable trunking, such as skirting trunking, conductor conduits, wiring and accessory ducts or similar, having a bottom section (44), whose opening (14) can be closed with a lid (15), the bottom section (44), on the one hand, and the lid (15), on the other hand, having interacting couplings and mating couplings which permit both the fixing of the lid (15) onto and the removal of the lid (15) from the bottom section (44), and the bottom section (44) of the cable trunking (10) having on each opposite limiting wall of its opening (14) an engagement chamber (18) for one of the two ends (27, 28, 29 and 38) of the lid (15), these engagement chambers (18) being of the same such design that either the one or the other end of the lid (15) can be introduced into one of the two engagement chambers (18) and that the one end of the lid (15) has a catch (27) for its detachable locking to the bottom section (44),
characterised in that
the catch (27) interacts directly with a mating catch (26) of the bottom section (44) of the cable trunking (10) and that the other end of the lid (15) is designed in such a way that the lid, after the catch (27) has been unlocked, can be moved either into its removal position or into its secured open position, the attachment end (38) having differently designed and dimensioned limiting surfaces (39, 40, 41, 43) which interact with support surfaces and inside surfaces of the engagement chamber (18) depending on the possible positions of the lid (15).

2. Cable trunking according to claim 1, characterised in that each engagement chamber (18) is limited outwards by a partial cover (16) of the bottom section (44), the inside wall of said cover having a recess (30) and to which a vertical limiting wall (20) is connected which goes into another horizontal limiting wall running parallel to the partial cover (16), said wall in turn ending in a fork-shaped end section (22), and that the engagement chamber (18) has, opposite the vertical limiting wall (20), an engagement opening (19) for the one end of the lid (15).

3. Cable trunking according to claims 1 and 2, characterised in that the fork-shaped end section (22) of the horizontal limiting wall (21) consists of two differently designed and dimensioned legs (23 and 24) which are separated from each other by an intermediate chamber (25), the shorter leg (24) of said two legs having the mating catch (26) which interacts with the catch (27) of the lid (15).

4. Cable trunking according to claims 1 to 3, characterised in that the lid (15) has near its one end (29) a finger-like projection (28) arranged at right angles to it, said finger bearing the catch (27) on its front end (Figs. 1-3).

5. Cable trunking according to claim 4, characterised in that the central section (34) of the lid (15) has a flat design, lies in its locked position flush with the partial covers (16) and whose other end forms a broadened attachment end (38) after a section (35) which is curved in the direction of the bottom section (44), the differently designed and dimensioned limiting surfaces (39, 40, 41, 43) lying on said attachment end (Figs. 3-7).

6. Cable trunking according to claims 2 and 5, characterised in that, when the lid (15) is in the locked position, the catch (27) of its one end grips behind the one mating catch (26) of the bottom section (44), whereas one tip (42) of the attachment section (38) of the lid (15) engages the recess (30) of the partial cover (16), and the outside (36) of the curved section (35) of the lid (15) rests on the support surface (33) of the one leg (24) of the fork-shaped end section (22) of the horizontal limiting wall (21) of the engagement chamber (18) (Fig. 3).

7. Cable trunking according to claim 6, characterised in that, when the lid (15) is in the locked position, its one end (29) is located at a distance from the free end (17) of the one partial cover (16) of the bottom section (44), a gap (45) being formed (Fig. 3).

8. Cable trunking according to claims 1 and 7, characterised in that, by inserting a tool, such as a screwdriver, into the gap (45) and turning it, the lid (15) can be moved into its unlocked position in which the catch (27) has passed over the mating catch (26) and the tip (42) of the attachment end (38) has emerged from the recess (30) (Fig. 4).

9. Cable trunking according to one or more of the preceding claims, characterised in that, when the lid (15) is in the removal position, its attachment end (38) lies freely in the engagement chamber (18) of the bottom section and in front of the engagement opening (19) of said chamber (Fig. 5).

10. Cable trunking according to claim 9, characterised in that the lid (15), in its removal position, encloses an angle of roughly 30° with the partial covers (16) of the bottom section (44) (Fig. 2, left half and Fig. 5).

11. Cable trunking according to claim 1, characterised in that, when the lid (15) is in its maximum open position, the attachment end (38) of said lid lies with its mating surface (43) on a support surface (32) of the leg (24) of the fork-shaped end (22) of the horizontal attachment wall (21) of the engagement chamber (18), and that the inside (37) of the curved section (35) of the lid (15) rests on the one rounded end (17) of the one partial cover (16) of the bottom section (44) (Fig. 6).

12. Cable trunking according to claim 11, characterised in that the lid (15), in its maximum open position, encloses an angle of roughly 60° with the two partial covers (16) of the bottom section (44) (Fig. 2, right half and Fig. 6).

13. Cable trunking according to claim 1 which is designed as dual trunking having two accommodation chambers whose upper openings can be sealed in each case by a lid, characterised in that the bottom (13) of the common bottom section (44) has a partition wall (46) arranged vertically to said bottom section, said partition wall having at its free end two diametrically opposite engagement chambers (18) (Fig. 2).

14. Cable trunking according to claim 13, characterised in that the two partial covers (16) and the horizontal limiting walls (21) of the engagement chambers (18) of the partition wall (46) are moulded on directly.

15. Cable trunking according to claims 13 and 14, characterised in that the top end of the partition wall (46) at the same time forms the common vertical limiting wall (20) for both engagement chambers (18).

16. Cable trunking according to one of the preceding claims, characterised in that the engagement openings (19) of the engagement chambers (18) lying on opposite sides of the opening (14) of the bottom section (44) are facing each other.

## Revendications

1. Caniveau pour câbles, tel qu'un caniveau en parapet, caniveau de câblage, caniveau à appareils intégrés ou autres, comportant une partie inférieure (44) dont l'ouverture (14) peut être fermée par un couvercle (15), la partie inférieure (44) d'une part et le couvercle (15) de l'autre présentant des pièces et contre-pièces d'accouplement coopérantes permettant à la fois de fixer le couvercle (15) sur la partie inférieure (44) et de l'enlever de celle-ci, les parois latérales opposées de la partie inférieure (44) du caniveau pour câbles (10), qui délimitent son ouverture (14), présentant chacune un logement (18) pour l'une des deux extrémités (27, 28, 29 ou 38) du couvercle (15), ces logements (18) étant conçus de manière semblable l'un à l'autre, de sorte que l'une ou l'autre extrémité du couvercle (15) puisse au choix être insérée dans l'un des deux logements (18) et que l'une des deux extrémités du couvercle (15) présente une encoche (27) permettant de la verrouiller de manière réversible à la partie inférieure (44),
caractérisé en ce que
l'encoche (27) coopère directement avec une contre-encoche (26) de la partie inférieure (44) du caniveau pour câbles (10) et que l'autre extrémité du couvercle (15) est conçue de telle manière qu'après déblocage de l'encoche (27), le couvercle peut être placé au choix dans sa position d'enlèvement ou dans sa position ouverte bloquée, l'extrémité de fixation (38) présentant des faces de séparation (39, 40, 41, 43) de formes et dimensions diverses qui, en fonction des positions possibles du couvercle (15), coopèrent avec les surfaces d'appui et les surfaces intérieures du logement (18).

2. Caniveau pour câbles selon la revendication 1, caractérisé en ce que chaque logement (18) est limité vers l'extérieur par un recouvrement partiel (16) de la partie inférieure (44), dont la paroi intérieure présente un creux (30) adjacent à une paroi de séparation verticale (20) que prolonge une autre paroi de séparation horizontale (21), s'étendant parallèlement au recouvrement partiel (16), qui quant à elle, se termine par une zone terminale en forme de fourche (22), et en ce que le logement (18) de la paroi de séparation verticale (20) présente à l'opposé une ouverture d'attaque (19) destinée à l'introduction de l'une des extrémités du couvercle (15).

3. Caniveau pour câbles selon les revendications 1 et 2, caractérisé en ce que la zone terminale en forme de fourche (22) de la paroi de séparation horizontale (21) se compose de deux branches (23 et 24) de formes et dimensions différentes, qui sont séparées l'une de l'autre par un intervalle (25), la plus courte (24) des branches présentant la contre-encoche (26) qui coopère avec l'encoche (27) du couvercle (15).

4. Caniveau pour câbles selon les revendications 1 à 3, caractérisé en ce que le couvercle (15) présente à proximité de l'une de ses extrémités (29) une saillie (28) en forme de doigt, disposée perpendiculairement à elle, qui porte l'encoche (27) sur sa face antérieure (Fig. 1 - 3).

5. Caniveau pour câbles selon la revendication 4, caractérisé en ce que la partie centrale (34) du couvercle (15) est plane, affleure dans sa position de verrouillage avec les recouvrements partiels (16) et se prolonge à son autre extrémité d'abord par une zone (35) recourbée en direction de la partie inférieure (44), puis par une extrémité de fixation élargie (38) qui présente des surfaces de séparation (39, 40, 41, 43) de formes et dimensions différentes (Fig. 3 - 7).

6. Caniveau pour câbles selon les revendications 2 et 5, caractérisé en ce que dans la position de verrouillage du couvercle (15), l'encoche (27) de l'une de ses extrémités attaque par l'arrière la contre-encoche (26) de la partie inférieure (44) tandis qu'une pointe (42) de la zone de fixation (38) du couvercle (15) s'engage dans le creux (30) du recouvrement partiel (16) et que la face extérieure (36) de la zone recourbée (35) du couvercle (15) vient prendre appui sur la surface d'appui (33) de l'une des branches (24) de la zone terminale en forme de fourche (22) de la paroi de séparation horizontale (21) du logement (18) (Fig. 3).

7. Caniveau pour câbles selon la revendication 6, caractérisé en ce que dans la position de verrouillage du couvercle (15), l'une de ses extrémités (29) est écartée de l'extrémité libre (17) de l'un des recouvrements partiels (16) de la partie inférieure (44) avec formation d'une fente (45) (Fig. 3).

8. Caniveau pour câbles selon les revendications 1 et 7, caractérisé en ce que le couvercle (15) peut être transféré d'une position de verrouillage dans une position de déverrouillage par l'introduction et la rotation dans la fente (45) d'un outil tel qu'un tournevis, position dans laquelle l'encoche (27) franchit la contre-encoche (26) et la pointe (42) de l'extrémité de fixation (38) sort du creux (30) (Fig. 4).

9. Caniveau pour câbles selon l'une quelconque ou plusieurs des revendications précédentes, caractérisé en ce que dans la position d'enlèvement du couvercle (15), son extrémité de fixation (38) est libre dans le logement (18) de la partie inférieure et fait face à l'ouverture d'attaque du logement (19) (Fig. 5).

10. Caniveau pour câbles selon la revendication 9, caractérisé en ce que dans sa position d'enlèvement, le couvercle (15) forme avec les recouvrements partiels (16) de la partie inférieure (44) un angle de 30° environ (moitié gauche de la Fig. 2 et Fig. 5).

11. Caniveau pour câbles selon la revendication 1, caractérisé en ce que dans sa position d'ouverture maximale, l'extrémité de fixation (38) du couvercle (15) repose, par sa contre-surface (43), sur une surface d'appui (32) de la branche (24) de l'extrémité en forme de fourche (22) de la paroi de fixation horizontale (21) du logement (18) et en ce que la face intérieure (37) de la zone recourbée (35) du couvercle (15) vient prendre appui sur l'extrémité arrondie (17) du recouvrement partiel (16) de la partie inférieure (44) (Fig. 6).

12. Caniveau pour câbles selon la revendication 11, caractérisé en ce que dans sa position d'ouverture maximale, le couvercle (15) forme avec les deux recouvrements partiels (16) de la partie inférieure (44) un angle de 60° environ (moitié droite de la Fig. 2 et Fig. 6).

13. Caniveau pour câbles selon la revendication 1 conçu comme un caniveau pour câbles doubles, qui présente deux chambres de garnissage dont l'ouverture supérieure peut être fermée respectivement par un couvercle, caractérisé en ce que le fond (13) de la partie inférieure commune (44) présente une paroi de séparation disposée perpendiculairement à ladite partie inférieure, laquelle paroi présente à son extrémité libre un logement (18) qui lui est diamétralement opposé (Fig. 2).

14. Caniveau pour câbles selon la revendication 13 caractérisé en ce que les deux recouvrements partiels (16) et les parois de séparation horizontales (21) des logements (18) de la paroi de séparation (46) sont coulés d'une pièce.

15. Caniveau pour câbles selon les revendications 13 et 14, caractérisé en ce que l'extrémité supérieure de la paroi de séparation (46) forme en même temps la paroi de séparation verticale (20) commune aux deux logements (18).

16. Caniveau pour câbles selon l'une quelconque des revendications précédentes, caractérisé en ce que les ouvertures d'attaque (19) des logements (18) situés de part et d'autre de l'ouverture (14) de la partie inférieure (44) sont alignées l'une sur l'autre.
